# FASCICULE DE BREVET EUROPEEN

(11) **EP 2 300 322 B1**
(45) Date de publication et mention de la délivrance du brevet: **31.07.2013**
(21) Numéro de dépôt: 09784218.1
(22) Date de dépôt: 23.06.2009
(51) Int. Cl.: B64D 43/00, G09G 5/12, G06F 3/14, B64D 11/00

(54) **POSTE DE PILOTAGE D'AÉRONEF AVEC UN DISPOSITIF D'AFFICHAGE AVIONIQUE**
COCKPIT EINES FLUGZEUGS MIT BORDELEKTRONIKANZEIGEVORRICHTUNG
AIRCRAFT CONTROL CABIN WITH AVIONICS DISPLAY DEVICE

(30) Priorité: 26.06.2008 FR 0854287
(43) Date de publication de la demande: 30.03.2011
(73) Titulaire: Airbus Operations, 31060 Toulouse (FR)
(72) Inventeur: DELERIS, Yannick, F-31330 Grenade (FR); DETOUILLON, Gregory, F-31200 Toulouse (FR); LAUTRIDOU, Vincent, F-31770 Colomiers (FR)
(74) Mandataire: Stankoff, Hélène
(86) Numéro de dépôt international: PCT/FR2009/000756
(87) Numéro de publication internationale: WO 2010/004114

(56) Documents cités:
- EP-A- 0 098 090
- FR-A- 2 663 605
- FR-A1- 2 748 145

## Description

La présente invention concerne un poste de pilotage d'aéronef comprenant un dispositif d'affichage avionique.

De manière générale, la présente invention trouve son application dans le domaine des postes de pilotage d'un aéronef, également appelés couramment cockpits, et concerne plus particulièrement les moyens d'affichage des informations pour l'équipage.

Dans les postes de pilotage d'aéronef moderne, l'affichage des informations est réalisé au moyen d'un système d'affichage avionique comprenant une série d'écrans fixes reliés à un ensemble de calculateurs capables d'élaborer, à partir de différents capteurs de l'avion, des informations pouvant être présentées sous forme synthétique et interprétable par les pilotes.

Ce système d'affichage fixé dans un poste de pilotage propose ainsi une surface d'affichage constante, dimensionnée pour prendre en compte toutes les situations et les besoins en terme d'affichage, permettant ainsi d'afficher toutes les informations nécessaires aux pilotes.

Ce dimensionnement des écrans a pour effet que, même si dans certaines phases particulièrement chargées, l'ensemble des écrans du système d'affichage fixe est indispensable à la bonne conduite des opérations, la majorité du temps d'utilisation de l'aéronef, la surface d'affichage proposée aux pilotes est surdimensionnée par rapport aux besoins.

Ce surdimensionnement a en outre pour conséquence de multiplier les sources d'informations disponibles et ainsi de diviser l'attention des pilotes.

En effet, plus il existe de sources d'informations dans le poste de pilotage, plus le circuit visuel que doit suivre le pilote est complexe pour prendre en compte toutes les informations disponibles. En outre, l'effort cognitif nécessaire pour trier et rechercher des informations est très important lorsqu'un grand nombre d'écrans est à la disposition du pilote.

Par ailleurs, en cas de perte d'un écran du système d'affichage, les informations essentielles sont alors reconfigurées sur un autre écran du système d'affichage, nécessitant pour le pilote de modifier le chemin visuel pour accéder à ces informations.

La position relative des informations étant ainsi modifiée dans le poste de pilotage, l'accès aux informations affichées est alors perturbé pour les pilotes.

On connaît dans le document FR 2 663 605 un poste de pilotage d'aéronef dans lequel un écran additionnel est prévu, en complément des écrans fixes du poste de pilotage, pour afficher des informations complémentaires.

Cependant, un tel écran additionnel n'a qu'une utilisation très ponctuelle et limitée dans le poste de pilotage.

Le document EP 0 098 090 A décrit un écran amovible occupant deux positions, une position rétractée dans laquelle l'écran est escamoté dans un logement dans lequel une face latérale de l'écran peut avoir, seule, une fonction d'affichage et une position d'extraction dans laquelle cet écran forme une surface additionnelle d'affichage.

Le document FR 2 748 145 A1 porte sur un écran tactile comme moyens d'entrée et de contrôle de données de vol.

La présente invention a pour but de proposer un dispositif d'affichage permettant une meilleure ergonomie et fonctionnalité du système d'affichage d'un poste de pilotage.

A cet égard, la présente invention concerne un poste de pilotage d'aéronef comprenant un dispositif d'affichage avionique avec plusieurs écrans fixes, et au moins un écran en tant qu'accessoire, adapté à constituer un écran de substitution ou de complément du système d'affichage avionique, ledit écran étant logé dans une tablette rétractable montée en coulissement par rapport à une planche de bord dudit poste de pilotage, ledit écran étant adapté à occuper une position de stockage et une première position d'utilisation dans ladite tablette rétractable.

Selon l'invention, l'écran est un écran tactile, la tablette rétractable étant montée en coulissement sous ladite planche de bord, ledit écran tactile étant stocké dans ladite position de stockage sous ladite planche de bord, ledit écran tactile constituant dans la première position d'utilisation un moyen d'interaction pour commander différents éléments du poste de pilotage, ledit écran tactile étant adapté à occuper une seconde position d'utilisation dans laquelle ledit écran tactile est disposé dans une position de substitution ou de complément d'un écran du système d'affichage avionique dans laquelle ledit écran tactile est extrait de la tablette rétractable.

Ce dispositif d'affichage permet ainsi de dimensionner le système d'affichage fixe à de justes proportions, permettant l'affichage des données nécessaires pour la conduite des opérations dans la majorité des cas.

En cas de panne d'un écran, ou lors d'un besoin ponctuel d'affichage d'informations additionnelles, le dispositif d'affichage vient compléter ou se substituer à un écran du système d'affichage.

Ainsi, en cas de perte d'un écran fixe, les informations essentielles qui étaient disponibles sur cet écran fixe peuvent être reconfigurées sur le dispositif d'affichage.

La position de stockage permet en outre de supprimer du champ visuel du pilote les écrans non essentiels au bon déroulement de l'opération en cours.

Le circuit visuel du pilote est ainsi allégé, celui-ci pouvant se concentrer sur les informations principales affichées sur le système d'affichage fixe.

Par ailleurs, lorsque l'écran tactile n'est pas utilisé comme écran d'affichage, il constitue un moyen d'interaction pour commander des éléments du poste de pilotage.

Du fait de la position de cet écran tactile dans une tablette rétractable, sous une planche de bord, son utilisation comme moyen d'interaction est facilitée pour le pilote placé devant la planche de bord.

En pratique, l'écran tactile est adapté à être positionné dans le poste de pilotage en superposition d'au moins un écran fixe dans la seconde position d'utilisation.

Ainsi, l'écran tactile se substitue non seulement fonctionnellement mais aussi physiquement à l'écran défaillant, le chemin visuel du pilote pour accéder aux informations affichées n'étant ainsi pas ou peu modifié en cas de panne d'un écran.

Selon une caractéristique avantageuse de l'invention, l'écran tactile est adapté à être positionné dans le poste de pilotage dans une position adjacente à au moins un écran fixe, l'écran tactile étant configuré pour afficher des fonctions spécifiques complémentaires à des fonctions affichées sur ledit écran fixe.

Le dispositif d'affichage permet ainsi d'augmenter, dans certaines phases d'opération particulièrement complexes, la surface d'affichage présentée au pilote.

En pratique, l'écran tactile constitue, dans la première position d'utilisation, un moyen d'interaction pour naviguer dans les écrans fixes au moyen de la commande d'un curseur.

Enfin, la présente invention concerne un aéronef comprenant un poste de pilotage conforme à l'invention.

D'autres particularités et avantages de l'invention apparaîtront encore dans la description ci-après.

Aux dessins annexés, donnés à titre d'exemples non limitatifs :
- la figure 1 illustre de manière schématique un poste de pilotage conforme à un mode de réalisation de l'invention, des dispositifs d'affichage étant en position de stockage ;
- les figures 2 et 3 sont des vues analogues à la figure 1 illustrant différentes positions d'utilisation des dispositifs d'affichage selon un mode de réalisation de l'invention ;
- les figures 4A, 4B, 5A, 5B, 6A, 6B, 7A, 7B sont des vues analogues à la figure 1 illustrant différents modes d'utilisation du dispositif d'affichage en cas de panne d'un écran fixe ; et
- les figures 8A, 8B, 8C, 8D illustrent un mode d'utilisation des dispositifs d'affichage lorsque l'ensemble des écrans d'un système d'affichage fixe sont en panne.

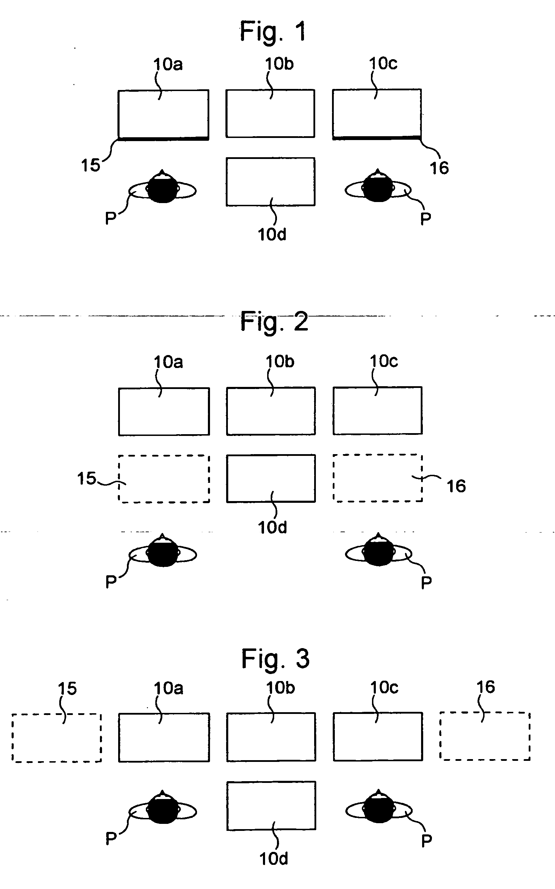

On va décrire tout d'abord en référence à la figure 1 un poste de pilotage d'àéronef conforme à un mode de réalisation de l'invention.

On a illustré à la figure 1 schématiquement un poste de pilotage permettant à deux pilotes P de réaliser toutes les opérations de manoeuvre et de commande en vol d'un aéronef.

Ce poste de pilotage comprend un dispositif d'affichage avionique permettant aux pilotes de visualiser sur des écrans des informations très diverses pour mener à bien le pilotage de l'aéronef.

Dans ce mode de réalisation, et de manière nullement limitative, le dispositif d'affichage avionique comprend plusieurs écrans fixes, et ici quatre écrans fixes 10a, 10b, 10c, 10d.

Ces écrans fixes 10a-10d sont reliés à des calculateurs ou ordinateurs (non représentés) permettant d'élaborer différentes informations, notamment en liaison avec des capteurs de l'aéronef.

En particulier, le système d'affichage avionique peut comporter au moins un écran CDS (acronyme en anglais de *Control and Display System),* permettant dans un mode particulier de réalisation d'afficher les instruments de vol électronique.

Il comporte en outre un écran EFB (acronyme du terme anglais *Electronic Flight Bag*) permettant d'interfacer un système informatique de documentation et d'information de vol.

Bien entendu, dans un autre mode de réalisation, les données des instruments de vol électronique et les données d'information de vol et de documentation peuvent être affichées sur un même écran.

Ce poste de pilotage comprend en outre au moins un écran en tant qu'accessoire au dispositif d'affichage.

Cet écran est repositionnable dans le poste de pilotage et peut ainsi occuper des positions multiples en fonction de son utilisation.

Dans ce mode de réalisation, comme illustré à la figure 1, le poste de pilotage comprend deux écrans 15, 16 illustrés en position de stockage à la figure 1 et en position d'utilisation aux figures 2 et 3.

Dans ce mode de réalisation, chaque écran 15, 16 est intégré au poste de pilotage et ici, est stocké dans une tablette rétractable montée en coulissement sous la planche de bord du poste de pilotage, au-dessus de laquelle sont placés les écrans fixes 10a-10d du système d'affichage fixe.

Ainsi, les écrans 15, 16 en position de stockage ne dépassent pas de la planche de bord et ne perturbent pas le champ visuel des pilotes.

Grâce à cette tablette rétractable, les écrans 15, 16 peuvent ainsi être stockés sous une planche de bord, sans interférer visuellement avec les écrans d'affichage fixes 10a-10d du système d'affichage du poste de pilotage.

On dispose ainsi de deux écrans 15, 16 pouvant être stockés à distance du système d'affichage fixe du poste de pilotage afin de ne pas gêner ou surcharger le champ visuel des pilotes.

Le montage d'un écran dans une tablette rétractable sous le tableau de bord du poste de pilotage n'a pas besoin d'être détaillé ici et peut être mis en oeuvre par l'homme du métier par tous moyens mécaniques appropriés.

Dans le mode de réalisation illustré aux figures 1 à 3, les écrans 15, 16 sont adaptés, outre leur position de stockage, à occuper une première position d'utilisation dans laquelle l'écran 15, 16 est positionné dans la tablette rétractable (figure 2) et une seconde position d'utilisation dans laquelle l'écran 15, 16 est extrait de la tablette rétractable et est disposé dans une position de substitution ou de complément d'un écran fixe 10a-10d du système d'affichage avionique.

Ici, les écrans 15, 16 comprennent en outre des moyens d'interaction avec au moins un élément de commande du poste de pilotage.

Ainsi, les écrans 15, 16 peuvent non seulement être utilisés pour des fonctions d'affichage mais également comme moyen d'interaction pour commander des fonctions diverses accessibles aux pilotes.

En particulier, les écrans 15, 16 peuvent être utilisés comme moyen principal d'interaction avec le poste de pilotage, permettant ainsi d'adresser différentes fonctions, et en particulier de naviguer dans les écrans d'affichage fixes 10a-10d au moyen de la commande d'un curseur et d'interagir avec des applications au travers du curseur.

Ces écrans 15, 16 peuvent également être utilisés comme instruments de secours en cas de perte d'un autre moyen d'interaction.

En pratique, les écrans 15, 16 sont chacun constitués d'un écran tactile.

Un tel écran permet à la fois de remplir des fonctions d'affichage et également de fournir un clavier virtuel et un pavé virtuel permettant au pilote d'interagir avec les différents éléments du poste de pilotage.

Ainsi, un tel écran 15, 16 peut être logé à la place d'un clavier physique et d'un dispositif de pointage pour interaction avec les écrans fixes 10a-10d du système d'affichage, placés traditionnellement dans une tablette coulissante sous les écrans fixes 10a-10d dans un poste de pilotage d'aéronef.

L'écran 15, 16 permet ainsi d'interagir en lieu et place de ces équipements avec les écrans d'affichage fixes 10a-10d du dispositif d'affichage de l'aéronef.

Comme illustré à la figure 2, l'écran tactile 15, 16 peut être ainsi disposé entre chaque pilote P et les écrans fixes 10a-10d du système d'affichage de l'aéronef pour permettre une commande aisée de navigation dans les différents formats ou fenêtres affichés par ces écrans fixes 10a-10d.

De préférence, l'écran tactile est un écran avec retour d'effort.

Ce type de technologie peut être fondé de manière connue sur une technologie haptique, permettant un retour d'effort et procurant une sensation d'enfoncement à la prise en compte d'un appui par le doigt ou à l'aide d'un stylet par le pilote sur l'écran.

Comme illustré à la figure 3, les écrans 15, 16 peuvent également être disposés en dehors de la tablette rétractable et à proximité d'un écran fixe 10a-10d du système d'affichage.

Dans le mode de réalisation illustré à la figure 3, et de manière nullement limitative, un premier écran 15 est adapté à être fixé dans le poste de pilotage dans une position adjacente à l'écran 10a du système d'affichage fixe et un second écran 16 est adapté à être fixé dans une position adjacente à l'écran 10c du système d'affichage fixe.

Ces écrans 15, 16 sont alors connectés aux ordinateurs de bord et configurés pour afficher des fonctions spécifiques complémentaires à des fonctions affichées sur les écrans fixes 10a, 10c.

Ainsi, en fonction des besoins des pilotes, des informations supplémentaires peuvent être affichées sur d'autres écrans que ceux prévus initialement dans le système d'affichage fixe du poste de pilotage.

Cette solution présente l'avantage de ne pas surdimensionner en nombre d'écrans le système d'affichage fixe et d'adapter celui-ci uniquement en cas de besoin, en ajoutant un ou plusieurs écrans 15, 16 à proximité des écrans fixes 10a-10d.

Par ailleurs, comme bien illustré sur les figures suivantes, les écrans 15, 16 peuvent être utilisés comme écran de substitution à un écran du système d'affichage fixe du poste de pilotage.

Ainsi, en cas de panne d'un écran 10a-10d, un ou plusieurs écrans 15, 16 peut être utilisé pour afficher les informations nécessaires aux pilotes pour assurer la bonne conduite de l'aéronef, et ainsi remplacer l'écran défaillant.

Le stockage d'un tel écran de secours permet d'éviter la présence en permanence d'un écran inutile et d'autoriser son utilisation uniquement lorsque la situation le requiert.

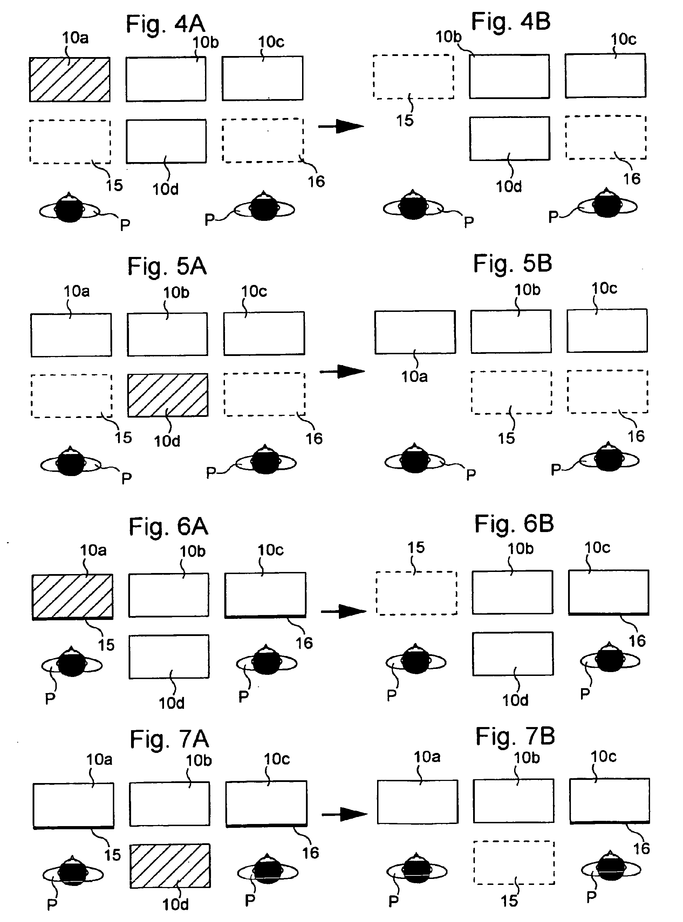

Les figures 4A, 5A, 6A, 7A illustrent différentes situations dans lesquelles un écran 10a-10d (hachuré sur les figures) du système d'affichage fixe tombe en panne.

Dans ce cas, un des écrans, et par exemple ici l'écran 15, est sorti de sa position de stockage sous la planche de bord, pour être placé physiquement en superposition de l'écran défaillant du système d'affichage fixe.

En pratique, l'écran 15 peut être désolidarisé de la tablette rétractable pour être positionné manuellement en superposition de l'écran défaillant. Un connecteur annexe localisé à proximité de l'écran défaillant permet de connecter l'écran 15.

Alternativement, l'écran 15 peut rester dans la tablette, celle-ci étant animée d'une cinématique appropriée pour être déplacée de la position de stockage sous la planche de bord, à une position sensiblement verticale, devant l'écran défaillant.

Une fois cet écran 15 configuré pour afficher les informations initialement affichées sur l'écran défaillant, l'écran 15 permet aux pilotes de visualiser les informations nécessaires aux opérations de commande de l'aéronef tout en conservant sensiblement le chemin visuel initial, l'écran 15 étant disposé au même endroit du poste de pilotage que l'écran défaillant à remplacer.

A titre d'exemple, à la figure 4A, l'écran 10a est défaillant.

Une solution disponible au pilote P est de remplacer cet écran 10a par le premier écran 15, le second écran 16 pouvant être conservé dans une première position d'utilisation comme moyen d'interaction (clavier, pointeur) avec les dispositifs d'affichage comme illustré à la figure 4B, ou encore comme moyen d'affichage.

De même, aux figures 5A et 5B, l'écran central 10d est défaillant et peut être remplacé de la même manière par le premier écran 15.

A la figure 6A, lorsque l'écran défaillant 10a est identifié, le pilote extrait le premier écran 15 pour le superposer à l'écran défaillant 10a.

Le second écran 16 dans ce mode de réalisation n'est pas utilisé et demeure stocké sous la planche de bord comme illustré à la figure 6B.

Les figures 7A et 7B illustrent de manière analogue ce type d'utitisation lorsque l'écran central 10d est défaillant.

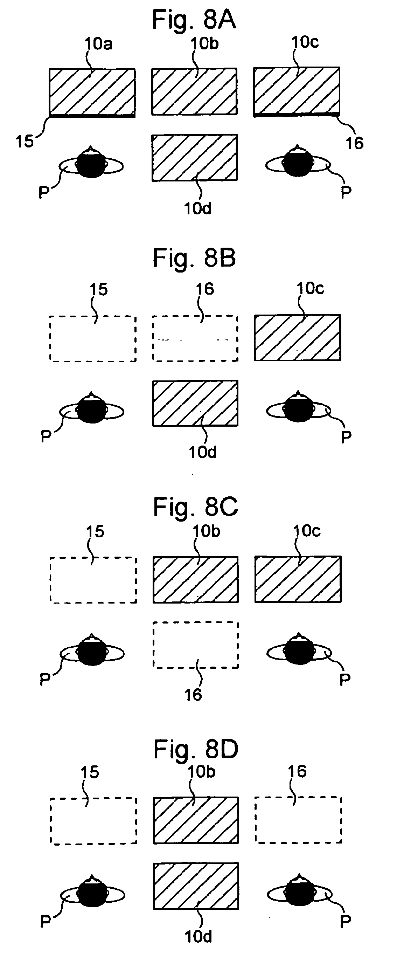

On a également illustré sur les figures 8A à 8D, une situation extrême dans laquelle l'ensemble des écrans fixes 10a-10d tombe en panne.

Sur un aéronef classique, lorsqu'une telle situation est rencontrée, les pilotes P doivent utilisés un moyen de secours pour terminer leur mission.

Ces moyens de secours permettent généralement de ramener l'aéronef au sol mais proposent des fonctionnalités très limitées.

Ici, comme illustré aux figures-88 à 8D, les écrans 15, 16 se substituent au mieux aux écrans défaillants.

S'agissant d'écrans tactiles, ils permettent non seulement d'afficher l'ensemble des informations nécessaires, mais également de fournir des moyens virtuels d'interaction avec le reste du poste de pilotage notamment grâce à la présence d'un clavier virtuel ou d'un élément de pointage virtuel.

Ainsi, en cas de panne d'un ou plusieurs écrans, la gestion de cette panne peut être réalisée de la manière suivante.

Dès qu'un défaut d'affichage est détecté (comportement non attendu ou affichage incohérent), l'écran en panne est mis hors service.

Les pilotes décident alors si la surface d'affichage restante du système d'affichage fixe du poste de pilotage est suffisante pour mener à bien la mission ou si un écran supplémentaire est utile.

Si la possibilité de disposer d'une surface d'affichage plus importante est utile, ou si le vol nécessite le remplacement physique de l'écran défaillant, au moins un des deux écrans 15, 16 logés dans les tablettes sous la planche de bord est par exemple extrait de son support.

Cet écran 15, 16 est ensuite connecté sur un des connecteurs auxiliaires disponibles dans le poste de pilotage, à proximité des écrans fixes 10a-10d du système d'affichage du poste de pilotage.

Il est ensuite fixé solidement à la planche de bord.

Une fois l'installation physique de l'écran réalisée, le pilote peut configurer cet écran de façon à disposer des informations dont il a besoin.

Bien entendu, comme indiqué précédemment, l'écran 15, 16 de remplacement peut rester fixer dans la tablette, celle-ci étant mobile dans le poste de pilotage par une cinématique appropriée.

Ainsi, lorsque la panne d'un écran a été traitée par l'équipage, l'écran 15, 16 permet de restaurer le système d'affichage des informations disponibles pour le pilote.

Bien entendu, de nombreuses modifications peuvent être apportées aux exemples de réalisation décrits précédemment sans sortir du cadre de l'invention.

Le nombre d'écrans fixes et repositionnables du poste de pilotage décrit précédemment n'est nullement limitatif.

## Revendications

1. Poste de pilotage d'aéronef comprenant un dispositif d'affichage avionique avec plusieurs écrans fixes (10a-10d), et au moins un écran (15, 16) en tant qu'accessoire, adapté à constituer un écran de substitution ou de complément dudit système d'affichage avionique, ledit écran (15, 16) étant logé dans une tablette rétractable montée en coulissement par rapport à une planche de bord dudit poste de pilotage, ledit écran étant adapté à occuper une position de stockage et une première position d'utilisation dans ladite tablette rétractable, **caractérisé en ce que** ledit écran (15, 16) est un écran tactile, la tablette rétractable étant montée en coulissement sous ladite planche de bord, ledit écran tactile (15, 16) étant stocké dans ladite position de stockage sous ladite planche de bord, ledit écran tactile (15, 16) constituant dans la première position d'utilisation un moyen d'interaction pour commander différents éléments du poste de pilotage, ledit écran tactile étant adapté à occuper une seconde position d'utilisation dans laquelle ledit écran tactile (15, 16) est disposé dans une position de substitution ou de complément d'un écran (10a-10d) du système d'affichage avionique dans laquelle ledit écran tactile (15, 16) est extrait de la tablette rétractable.

2. Poste de pilotage d'aéronef selon la revendication 1, **caractérisé en ce que** ledit écran tactile (15, 16) est adapté à être positionné dans ledit poste de pilotage en superposition d'au moins un écran fixe (10a-10d) dans ladite seconde position d'utilisation.

3. Poste de pilotage d'aéronef conforme à l'une des revendications 1 ou 2, **caractérisé en ce que** ledit écran tactile (15, 16) est adapté à être positionné dans ledit poste de pilotage dans une position adjacente à au moins un écran fixe (10a-10d), ledit écran tactile (15, 16) étant configuré pour afficher des fonctions spécifiques complémentaires à des fonctions affichées sur ledit écran fixe (10a-10d).

4. Poste de pilotage d'aéronef conforme à l'une des revendications 1 à 3, **caractérisé en ce que** ledit écran tactile (15, 16) constitue, dans ladite première position d'utilisation, un moyen d'interaction pour naviguer dans les écrans fixes (10a-10d) au moyen de la commande d'un curseur.

5. Poste de pilotage d'aéronef conforme à l'une des revendications 1 à 4, **caractérisé en ce que** dans ladite première position d'utilisation, ledit écran tactile (15, 16) est adapté à fournir un clavier virtuel et un pavé virtuel.

6. Aéronef, **caractérisé en ce qu'**il comprend un poste de pilotage conforme à l'une des revendications 1 à 5.

## Patentansprüche

1. Cockpit eines Luftfahrzeugs, umfassend eine Bordelektronikanzeigevorrichtung mit mehreren festen Bildschirmen (10a-10d) sowie wenigstens einen Bildschirm (15, 16) als Zubehör, der dazu ausgelegt ist, einen Ersatz- oder Ergänzungsbildschirm des Bordelektronikanzeigesystems zu bilden, wobei der Bildschirm (15, 16) in einer einfahrbaren Platte aufgenommen ist, welche gegenüber einer Instrumententafel des Cockpits verschieblich angebracht ist, wobei der Bildschirm dazu ausgelegt ist, eine Aufbewahrungsposition und eine erste Einsatzposition in der einfahrbaren Platte einzunehmen, **dadurch gekennzeichnet, dass** der Bildschirm (15, 16) ein berührungsempfindlicher Bildschirm ist, wobei die einfahrbare Platte unter der Instrumententafel verschieblich angebracht ist, wobei der berührungsempfindliche Bildschirm (15, 16) in der Aufbewahrungsposition unter der Instrumententafel aufbewahrt ist, wobei der berührungsempfindliche Bildschirm (15, 16) in der ersten Einsatzposition ein Interaktionsmittel zum Steuern unterschiedlicher Elemente des Cockpits bildet, wobei der berührungsempfindliche Bildschirm dazu ausgelegt ist, eine zweite Einsatzposition einzunehmen, in welcher der berührungsempfindliche Bildschirm (15, 16) in einer Ersatz- oder Ergänzungsposition eines Bildschirms (10a-10d) des Bordelektronikanzeigesystems angeordnet ist, in der der berührungsempfindliche Bildschirm (15, 16) aus der einfahrbaren Platte herausgezogen ist.

2. Cockpit eines Luftfahrzeugs nach Anspruch 1 **dadurch gekennzeichnet, dass** der berührungsempfindliche Bildschirm (15, 16) dazu ausgelegt ist, in dem Cockpit in der zweiten Einsatzposition über wenigstens einem festen Bildschirm (10a-10d) liegend positioniert zu werden.

3. Cockpit eines Luftfahrzeugs nach einem der Ansprüche 1 oder 2, **dadurch gekennzeichnet, dass** der berührungsempfindliche Bildschirm (15, 16) dazu ausgelegt ist, in dem Cockpit in einer an wenigstens einen festen Bildschirm (10a-10d) angrenzenden Position positioniert zu werden, wobei der berührungsempfindliche Bildschirm (15, 16) dazu ausgelegt ist, spezifische Funktionen ergänzend zu auf dem festen Bildschirm (10a-10d) angezeigten Funktionen anzuzeigen.

4. Cockpit eines Luftfahrzeugs nach einem der Ansprüche 1 bis 3, **dadurch gekennzeichnet, dass** der berührungsempfindliche Bildschirm (15, 16) in der ersten Einsatzposition ein Interaktionsmittel zum Navigieren auf den festen Bildschirmen (10a-10d) mittels der Steuerung eines Cursors bildet.

5. Cockpit eines Luftfahrzeugs nach einem der Ansprüche 1 bis 4, **dadurch gekennzeichnet, dass** der berührungsempfindliche Bildschirm (15, 16) in der ersten Einsatzposition dazu ausgelegt ist, eine virtuelle Tastatur sowie einen virtuellen Tastenblock bereitzustellen.

6. Luftfahrzeug, **dadurch gekennzeichnet, dass** es ein Cockpit nach einem der Ansprüche 1 bis 5 umfasst.

## Claims

1. Aircraft cockpit comprising an avionic display device with several fixed screens (10a-10d), and at least one screen (15, 16) as an ancillary, adapted for constituting a replacement or complementary screen for the said avionic display system, the said screen (15, 16) being accommodated in a retractable shelf installed sliding with respect to an instrument panel of the said cockpit, the said screen being adapted for occupying a storage position and a first use position in the said retractable shelf, **characterized in that** the said screen (15, 16) is a touch screen, the said retractable shelf being installed sliding underneath the said instrument panel, the said touch screen (15, 16) being stored in the storage position underneath the said instrument panel, the said touch screen (15, 16) constituting in the first use position an interactive means for controlling different components of the cockpit, the said touch screen being adapted for occupying a second use position in which the said touch screen (15, 16) is disposed in a position of replacement or complement for a screen (10a-10d) of the avionic display system, in which the said touch screen (15, 16) is pulled out from the retractable shelf.

2. Aircraft cockpit according to claim 1, **characterized in that** the said touch screen (15, 16) is adapted for being positioned in the said cockpit superposed on at least one fixed screen (10a-10d) in the said second use position.

3. Aircraft cockpit according to one of claims 1 or 2, **characterized in that** the said touch screen (15, 16) is adapted for being positioned in the said cockpit in a position adjacent to at least one fixed screen (10a-10d), the said touch screen (15, 16) being configured for displaying specific functions complementary to functions displayed on the said fixed screen (10a-10d).

4. Aircraft cockpit according to one of claims 1 to 3, **characterized in that** the said touch screen (15, 16) constitutes, in the said first use position, an interactive means for navigating in the fixed screens (10a-10d) by the control of a cursor.

5. Aircraft cockpit according to one of claims 1 to 4, **characterized in that** in the said first use position, the said touch screen (15, 16) is adapted for providing a virtual keyboard and a virtual keypad.

6. Aircraft, **characterized in that** it comprises a cockpit according to one of claims 1 to 5.
